# EUROPÄISCHE PATENTSCHRIFT

(11) **EP 3 390 112 B1**
(45) Veröffentlichungstag und Bekanntmachung des Hinweises auf die Patenterteilung: **07.04.2021**
(21) Anmeldenummer: 16766935.7
(22) Anmeldetag: 15.09.2016
(51) Int. Cl.: B60C 11/16

(54) **FAHRZEUGLUFTREIFEN MIT SPIKEKÖRPERN**
VEHICLE TIRE WITH SPIKES
PNEUMATIQUE DE VÉHICULE AVEC CRAMPONS

(30) Priorität: 15.12.2015 DE 102015225224
(43) Veröffentlichungstag der Anmeldung: 24.10.2018
(73) Patentinhaber: Continental Reifen Deutschland GmbH, 30165 Hannover (DE)
(72) Erfinder: BRANDAU, Christian, 31542 Bad Nenndorf (DE); SCHLITTENHARD, Jan, 30900 Wedemark (DE)
(74) Vertreter: Continental Corporation
(86) Internationale Anmeldenummer: PCT/EP2016/071756
(87) Internationale Veröffentlichungsnummer: WO 2017/102115

(56) Entgegenhaltungen:
- EP-A1- 1 055 509
- WO-A1-2015/139860
- DE-A1- 2 300 803
- JP-A- S57 134 304

## Beschreibung

Die Erfindung betrifft einen Fahrzeugluftreifen nach dem Oberbegriff des Patentanspruches 1.

Fahrzeugluftreifen mit Spikes werden ausschließlich als Winterreifen eingesetzt, um eine möglichst optimale Kraftübertragung auf Schnee und Eis zu erreichen. Derartige Fahrzeugluftreifen verfügen über eine profilierte Lauffläche, in die zahlreiche Spikes eingebettet sind, wobei jeder Spike aus einem Spikekörper mit einem Spikefuß und einem aus der Lauffläche des Fahrzeugluftreifens hervorstehenden Spikepin besteht. Bei schnee- und eisfreier Straße weisen Spikes allerdings den Nachteil auf, dass sie wegen der in der Regel aus Hartmetall bestehenden Spikepins zu einer Straßenschädigung führen. Dabei ist es bekannt, dass die Schäden an der Straßenoberfläche vermindert werden können, wenn das Gewicht des Spikes reduziert wird.

Aus diesem Grund beschreibt zum Beispiel die RU 2 148 498 C1 einen Fahrzeugluftreifen mit Spikes, bei denen der Spikepin bis auf das aus der Lauffläche herausragende, freie Ende vollständig in einem Polymerkörper aufgenommen und von diesem umschlossen ist, wodurch sich eine erhebliche Gewichteinsparung des Spikes ergibt.

Der Spikekörper des Spikes hat die Aufgabe, den Spikepin aufzunehmen und eine sichere Fixierung des Spikes in dem Fahrzeugluftreifen zu gewährleisten. Gegenwärtig werden Spikes mit runden oder unrunden Spikekörperformen in symmetrischen, nicht richtungsgebundenen oder symmetrischen, richtungsgebundenen oder auch in asymmetrischen Fahrzeugluftreifen zum Einsatz gebracht. Die nicht runden Spikekörperformen weisen dabei zumeist zwei Symmetrieebenen auf, wobei eine Symmetrieebene in Umfangsrichtung des Fahrzeugluftreifens und die andere Symmetrieebene in Querrichtung des Fahrzeugluftreifens weist. Es gibt jedoch auch Ausführungen, bei denen der Spikekörper nur eine Symmetrieebene besitzt. In diesem Fall weist die Symmetrieebene bislang ausschließlich in Umfangsrichtung des Fahrzeugluftreifens.

Derartige, symmetrisch ausgeführte Spikes gehen beispielsweise aus der DE 103 54 331 A1, der EP 2 540 527 A1, der DE-OS 1 228 158, der DE 10 2011 000 563 A1 oder dem Gemeinschaftsgeschmacksmuster 000900139-001 hervor.

Darüber hinaus sind auch bereits ausgerichtete Positionierungen des Spikekörpers und damit des Spikepins im Fahrzeugluftreifen bekannt und im Einsatz. Als Beispiele für derartige Spikes sei an dieser Stelle auf die US 2004/0163746 A1, die WO 2009/068744 A1 oder die EP 1 199 193 B1 verwiesen.

In der WO2015/139860 A1 ist ein Spike zur Integration in einen Fahrzeugluftreifen offenbart, wobei der Spike aus einem Spikekörper und einem aus der Lauffläche des Fahrzeugluftreifens hervorstehenden Spikepin besteht. Dabei ist der beschriebene Spikepin in zumindest einer, auf den Fahrzeugluftreifen bezogenen Ebene asymmetrisch ausgebildet.

Die JP S57 134304 A betrifft einen Fahrzeugluftreifen mit einer profilierten Lauffläche, in die mehrere Spikes eingebettet sind, wobei jeder Spike einen aus der Lauffläche des Fahrzeugluftreifens hervorstehenden Spikepin aufweist und die Spikes, mit Bezug zur Umfangsrichtung der Lauffläche des Fahrzeugluftreifens betrachtet, eine Schrägstellung aufweisen.

Aus der DE 2 300 803 A1 geht ein Fahrzeugluftreifen hervor, der schräge und erhöht angebrachte Spikes aufweist, die in hierfür speziell ausgebildete Reifenstollen eingefügt sind.

Die EP 1 055 509 A1 befasst sich schließlich mit einem speziellen Verfahren zur Herstellung eines Fahrzeugluftreifens, der mit Spikes ausgestattet ist und mit einer für die Anwendung des Verfahrens geeigneten Form.

Die Ausführung beziehungsweise Gestaltung des Spikekörpers beeinflusst zudem ganz wesentlich die Bettungssteifigkeit und damit das Kippverhalten des Spikes im Eiseingriff. Dieses Kippverhalten hat wiederum einen starken Einfluss auf die Eisperformance des Spikes und des mit dem Spike ausgestatteten Fahrzeugluftreifens.

Heute bekannte Spikes sind ausschließlich auf maximal übertragbare Längskräfte (Traktion / Bremsen) ausgelegt und optimiert, wobei die besonderen Anforderungen der Spikebettung in Querrichtung des Fahrzeugluftreifens vollständig vernachlässigt werden, obwohl diese ebenfalls einen erheblichen Einfluss auf die Eigenschaften des mit Spikes ausgestatteten Fahrzeugluftreifens haben.

Der Erfindung liegt die Aufgabe zugrunde, insbesondere asymmetrische, mit Spikes ausgestatteten Fahrzeugluftreifen hinsichtlich ihrer Fahreigenschaften zu verbessern.

Die Erfindung löst diese Aufgabenstellung mit den kennzeichnenden Merkmalen des Patentanspruches 1.

Weitere Ausgestaltungen der Erfindung sind Gegenstand der sich anschließenden Unteransprüche.

Ein Fahrzeugluftreifen mit einer profilierten Lauffläche, in die mehrere Spikes eingebettet sind, wobei jeder Spike aus einem Spikekörper mit einem Spikefuß und einem aus der Lauffläche des Fahrzeugluftreifens hervorstehenden Spikepin bestehtund bei dem die Spikes, in Querrichtung oder in Umfangsrichtung des Fahrzeugluftreifens betrachtet, asymmetrisch ausgebildet sind, wurde erfindungsgemäß dahingehend weitergebildet, dass der Spikefuß unter einem spitzen Winkel zu einer geometrischen, quer zur Umfangsrichtung oder tangential zur Umfangsrichtung des Fahrzeugluftreifens verlaufenden, horizontalen Ebene in die Lauffläche des Fahrzeugluftreifens eingebettet ist.

Durch die Anordnung des Spikefußes und damit der Ausrichtung des Spikes innerhalb der Lauffläche des Fahrzeugluftreifens können bei einer Neigung des Spikefußes zur Umfangsrichtung insbesondere Optimierungen hinsichtlich der Traktion und des Bremsverhaltens des Fahrzeugluftreifens erreicht werden.

Bei asymmetrischen Fahrzeugluftreifen werden durch die Anordnung des Spikefußes in einem Winkel quer zur Umfangsrichtung insbesondere die Querkräfte optimiert, die sich aus der asymmetrischen Gestaltung des Fahrzeugluftreifens ergeben.

Eine asymmetrische Gestaltung beeinflusst die Bettungssteifigkeit des Spikes in positiver Weise, was insbesondere beim Einsatz von Antiblockiersystemen (ABS) und/oder Antischlupfregelungssystemen (ASR) von Vorteil ist, da bei der Übertragung von Traktionskräften, also Antriebskräften, höhere Schlupfwerte zugelassen werden als bei der Übertragung von Bremskräften. Diese Schlupfabhängigkeit bewirkt, dass unterschiedliche Bettungssteifigkeiten für die Übertragung von Traktions- oder von Bremskräften möglich sind. So wird bei Traktionskräften eher eine weiche Bettung zur Dämpfung von hochfrequenten Anregungen und zur Verhinderung des "frühzeitigen Eisbruchs" bevorzugt, was einer besseren mechanischen Verzahnung des Spikes mit dem Eisuntergrund bedeutet. Beim Bremsen hingegen ist nur ein geringer Schlupf zulässig, so dass eine Neigung beziehungsweise ein Verkippen des Spikes vermieden werden muss. Eine asymmetrische Materialdickenverteilung im Spikekörper kann zur Erzeugung von unterschiedlichen Verspannungen in der den Spike umgebenen Gummimatrix und damit zu wechselnden Bettungssteifigkeiten in unterschiedlichen Richtungen genutzt werden.

Die genannten Gestaltungsprinzipien haben zusätzlich noch das Potential eine Gewichtsreduktion des Spikes zu ermöglichen, welches sich, wie eingangs bereits erwähnt wurde, unmittelbar im Sinne einer Reduzierung des Straßenverschleißes auswirkt. Zusammenfassend lässt sich durch eine asymmetrische Ausbildung des Spikes beziehungsweise einer asymmetrischen Anordnung desselben in Querrichtung des Fahrzeugluftreifens bei gleichbleibender Traktions-/Bremskraft die Querbettungssteifigkeit gezielt beeinflussen und somit die Seitenführung des Spikes im Fahrzeugluftreifen erhöhen. Daraus folgt ein verbesserter Eiseingriff (Eisgrip) bei reduziertem Straßenabrieb.

Wird darüber hinaus eine asymmetrische Spikekörpergestaltung um die Hochachse, also in Vertikalrichtung zur Lauffläche des Fahrzeugluftreifens, vorgesehen, so kann zum Beispiel die Bettungssteifigkeit in Umfangsrichtung des Fahrzeugluftreifens zusätzlich beeinflusst werden, was ebenfalls zu optimierten Brems- und Traktionskräften führt.

Eine erste Ausgestaltung der Erfindung geht dahin, dass der Spikefuß einen ebenen Abschnitt aufweist, der einen spitzen Winkel mit einer geometrischen, tangential zur Umfangsrichtung des Fahrzeugluftreifens verlaufenden, horizontalen Ebene einschließt. Durch diese Lösung kann erreicht werden, dass die Bettungssteifigkeit des Spikes in dem Bereich höher ist, in dem sich der ebene Abschnitt des Spikefußes befindet. Dies resultiert daraus, dass in diesem Bereich unterhalb des Spikefußes mehr Gummiwerkstoff angeordnet ist, als im übrigen Bereich des Spikefußes. Einfacher ausgedrückt ist der Untergrund im Bereich des ebenen Abschnittes des Spikefußes härter, als in den diesen umgebenden Bereichen.

Alternativ hierzu besteht eine weitere Möglichkeit, den Eingriff oder Grip eines erfindungsgemäßen Fahrzeugluftreifens zu verbessern, darin, den Spikefuß mit zwei, einander gegenüberliegenden, ebenen Abschnitten auszustatten, die jeweils einen spitzen Winkel mit einer geometrischen, tangential zur Umfangsrichtung des Fahrzeugluftreifens verlaufenden, horizontalen Ebene einschließen. Bei einer derartigen Ausführung des Spikes weist dieser an zwei, einander gegenüberliegenden Seiten einen verstärkten Bereich aus Gummiwerkstoff auf, so dass die Bettungssteifigkeit in zueinander entgegengesetzten Richtungen höher ist. Rechtwinklig hierzu ist die Bettungssteifigkeit folglich geringer und der Spike kann in diese Richtungen leichter ausweichen.

Ein ähnliches Ergebnis lässt sich hinsichtlich der Bettungssteifigkeit auch erreichen, wenn der Spikefuß wenigstens einen Verstärkungsbereich aufweist. Ein derartiger Verstärkungsbereich bewirkt, dass auf der dem Verstärkungsbereich gegenüberliegenden Seite des Spikefußes mehr Gummiwerkstoff zur Verfügung steht und damit die Bettungssteifigkeit höher ist, als im Abschnitt des Verstärkungsbereich ist.

Eine sehr spezielle Ausführungsvariante eines erfindungsgemäßen Fahrzeugluftreifens ist darüber hinaus darin zu sehen, dass der Spikefuß die Form eines Pilzkopfes aufweist. Auch der Spikekörper des Spikes kann die Form eines Pilzstils aufweisen, so dass der Spike insgesamt in seiner Seitenansicht beziehungsweise im Längsschnitt wie ein Pilz gestaltet ist. Auf diese Weise ist er auch fertigungstechnisch einfach herzustellen.

Durch eine weiterbildende Maßnahme der Erfindung, bei der der Spikekörper und/oder der Spikefuß und/oder der Spikepin zumindest einseitig eine Abflachung beziehungsweise einen ebenen Abschnitt aufweist beziehungsweise aufweisen, ist darüber hinaus die gerichtete Beeinflussung der Bettungssteifigkeit des Spikes erreichbar. So neigt der Spike im Bereich der Abflachung eher weniger dazu, bei äußerer Krafteinwirkung auf den Spike, in den Grundwerkstoff des Fahrzeugluftreifens einzusinken, während er auf der der Abflachung gegenüberliegenden Seite stärker dazu tendiert, intensiverer in den Grundwerkstoff des Fahrzeugluftreifens einzudringen.

Die zuvor genannte Maßnahme kann noch gesteigert werden, wenn der Spikekörper und/oder der Spikefuß und/oder der Spikepin eine annähernd keilförmige Geometrie aufweist beziehungsweise aufweisen. Die keilförmig die Geometrie neigt naturgemäß in verstärktem Maße dazu, leichter in den Grundwerkstoff des Fahrzeugluftreifens einzusinken, da dieser dem Spike einen geringeren Widerstand entgegensetzen kann. In dieser Richtung wird sich also ein eher weiches Verhalten des Spikes einstellen.

Dieses Merkmal kann in Alleinstellung oder in Kombination mit der zuvor bereits erwähnten Abflachung zum Einsatz kommen.

Bei der Gestaltung des Spikes gibt es hinsichtlich der Abflachung beziehungsweise der Keilform die unterschiedlichsten Ausführungsvarianten. Da sowohl der Spikekörper, der Spikefuß, als auch der Spikepin eine zumindest einseitige Keilform aufweisen können, besteht zunächst die Möglichkeit, dass die spitz zulaufende Geometrie der Keilform in gleicher Ausrichtung zueinander vorgesehen wird. Anders ausgedrückt weist die Spitze der Keilform des Spikekörpers, des Spikefußes und der Spikepins in dieselbe Richtung.

Alternativ hierzu kann jedes einzelne Element des Spikes eine Ausrichtung seiner Keilform auch in eine entgegengesetzte Richtung zu einem oder mehreren der anderen Elemente aufweisen. Folglich besteht eine Ausgestaltung der Erfindung darin, dass die Keilform des Spikekörpers und/oder des Spikefußes und/oder des Spikepins in zueinander wechselnden Richtungen ausgerichtet sind.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: ein für den Winterbetrieb geeigneter Fahrzeugluftreifen mit Spikes,
- Figur 2:: ausschnittsweise ein in die Lauffläche des Fahrzeugluftreifens integrierter Spike in einer ersten Ausführungsvariante,
- Figur 3:: ausschnittsweise ein in die Lauffläche des Fahrzeugluftreifens integrierter Spike in einer zweiten Ausführungsvariante,
- Figur 4:: die Krafteinwirkung auf einen Spike innerhalb eines Fahrzeugluftreifens bei gegebener Traktion,
- Figur 5:: die Krafteinwirkung auf einen Spike innerhalb eines Fahrzeugluftreifens beim Bremsvorgang,
- Figur 6:: einen Spike mit einem einseitig ausgebildeten, ebenen Abschnitt am Spikefuß,
- Figur 7:: einen Spike mit zwei, an einander gegenüberliegenden Seiten ausgebildeten, ebenen Abschnitten am Spikefuß,
- Figur 8:: einen Spike in Pilzform,
- Figur 9:: den Blick auf einen Spike in Richtung auf die Lauffläche des Fahrzeugluftreifens, in einer speziellen Ausführungsvariante,
- Figur 10:: den Blick auf einen Spike in Richtung auf die Lauffläche des Fahrzeugluftreifens, in einer zur Darstellung in Figur 9 abweichenden Ausführungsvariante,
- Figur 11:: den Blick auf einen Spike in Richtung auf die Lauffläche des Fahrzeugluftreifens, in einer weiteren Ausführungsvariante,
- Figur 12:: den Blick auf einen Spike in Richtung auf die Lauffläche des Fahrzeugluftreifens, in einer Ausführungsvariante mit einer Keilform,
- und Figur 13:: den Blick auf einen Spike in Richtung auf die Lauffläche des Fahrzeugluftreifens, in einer Ausführungsvariante mit weiteren Keilformen.

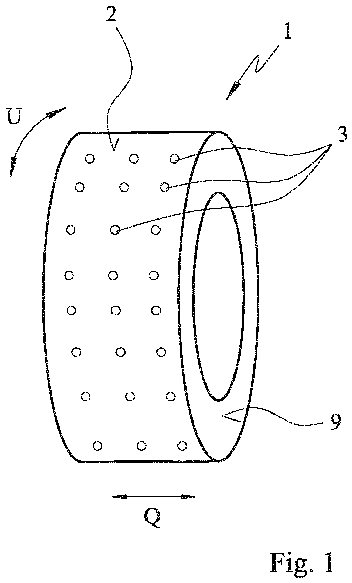

Die Figur 1 zeigt einen für den Winterbetrieb geeigneten Fahrzeugluftreifen 1 mit einer Vielzahl über den Umfang seiner Lauffläche 2 verteilt angeordneter Spikes 3. Seitlich der Lauffläche 2 des Fahrzeugluftreifens 1 geht die Lauffläche 2 in Seitenwände 9 über. In der Darstellung sind die Umfangsrichtung U sowie die Richtung quer zur Umfangsrichtung Q des Fahrzeugluftreifens 1 durch Doppelpfeile symbolisiert. Die Spikes 3 werden während der Herstellung des Fahrzeugluftreifens 1 in an sich bekannter Weise in die Lauffläche 2 integriert, was beispielsweise während des Vulkanisationsverfahrens erfolgen kann. Sie sind allgemein dazu geeignet, die Haftung beziehungsweise den Grip des Fahrzeugluftreifens 1 auf Untergründen aus Schnee oder Eis zu verbessern. Hierzu weisen Spikes 3 einen aus der Lauffläche 2 hervorstehenden Spikepin 6 auf, der aus Hartmetall gefertigt ist. Die vorteilhafte Verbesserung der Haftung des Fahrzeugluftreifens 1 auf eisigem oder verschneiten Untergrund bringt jedoch den Nachteil mit sich, dass die Spikes 3 auf schnee- oder eisfreien Straßen zu Schäden führen, die es möglichst zu vermeiden gilt. Hierzu gibt es unterschiedliche Lösungsansätze.

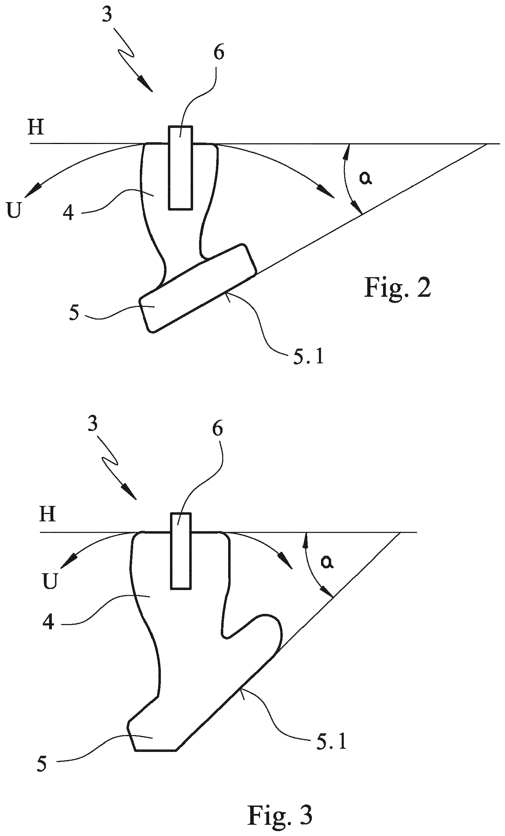

Bei einer Ausführung eines Spikes 3, wie er beispielsweise in den Figuren 2 und 3 dargestellt ist, wird dabei der Gedanke verfolgt, den Spike 3 asymmetrisch auszuführen, was mit anderen Worten bedeutet, dass der Spike 3 nicht in der bislang üblichen, vertikalen Anordnung in die Lauffläche 2 des Fahrzeugluftreifens 1 eingebracht ist, sondern eine zumindest abschnittsweise Schrägstellung aufweist. In an sich bekannter Weise besteht ein derartiger Spike 3 auch aus einem Spikekörper 4 der auf der dem Spikepin 6 gegenüberliegenden Seite in einen Spikefuß 5 übergeht. Wie aus den Figuren 2 und 3 ersichtlich ist, weist der Spikefuß 5 in diesem Fall einen ebenen Abschnitt 5.1 auf, der unter einem Winkel α zu einer an die Umfangsrichtung U der Lauffläche 2 des Fahrzeugluftreifens 1 angelegten Tangente H ausgerichtet ist. Durch diese Maßnahme kann erreicht werden, dass die Bettungssteifigkeit, das heißt, die Abstützung des Spikes 3 in dem Fahrzeugluftreifen 1, in zueinander entgegen gesetzten Richtungen unterschiedlich ausfällt. Bezüglich der Darstellungen in den Figuren 2 und 3 bedeutet dies, dass unterhalb des ebenen Abschnitts 5.1 des Spikefußes 5 mehr Grundwerkstoff, also Gummi, vorhanden ist, als an den übrigen Abschnitten des Spikefußes 5. Folglich erfährt der Spike 3 in der Richtung der Materialanhäufung des Gummiwerkstoffes eine härtere Bettung, als auf der Seite, auf der sich weniger Gummiwerkstoff des Fahrzeugluftreifens 1 befindet. Zu den Figuren 2 und 3 ist anzumerken, dass sich die Ausführungen der dargestellten Spikes 3 lediglich in der geometrischen Gestaltung des Spikefußes 5 unterscheiden. So weist der Spikefuß 5 in Figur 2 eher einen rechteckigen Querschnitt und der Spikefuß in Figur 3 eine abgerundete Querschnittsgeometrie auf.

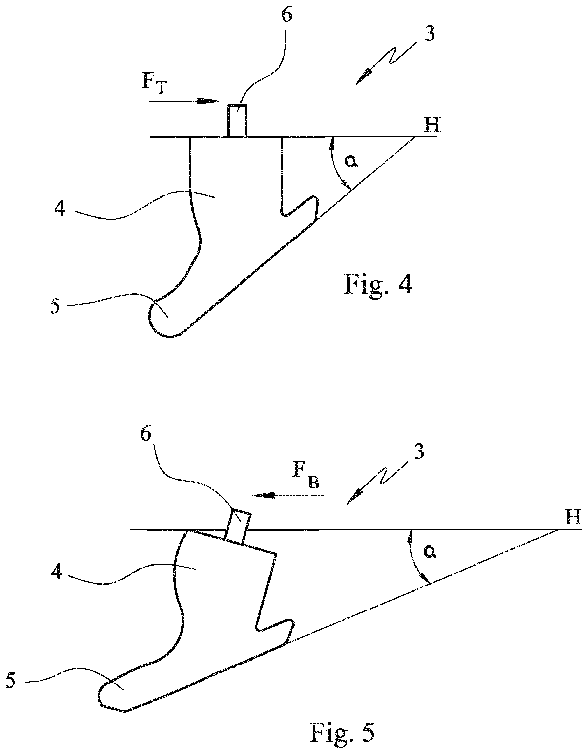

Die Figur 4 zeigt die Traktions-Krafteinwirkung F_{T} auf einen Spike 3 innerhalb eines Fahrzeugluftreifens 1 und die Figur 5 die Krafteinwirkung F_{B} auf einen Spike 3 innerhalb eines Fahrzeugluftreifens 1 beim Bremsvorgang. Durch die Schrägstellung des Spikes 3 unter einem Winkel α zur Tangente H der Umfangsrichtung U ist unter der Schrägfläche des Spikefußes 5 mehr Gummiwerkstoff des Fahrzeugluftreifens 1 vorhanden, was zu einer erhöhten Bettungssteifigkeit in diesem Abschnitt führt. Dadurch wird bei der Traktion, das heißt, bei der Aufbringung einer Antriebskraft auf das mit dem Fahrzeugluftreifen 1 ausgestattete Fahrzeugrad, nahezu keine Auslenkung am Spike 3 bewirkt. Dies ist in der Figur 4 dadurch zu erkennen, dass die der Lauffläche 2 zugewandte Seite des Spikekörpers 4 praktisch keine Auslenkung erfährt. Durch eine derartige Ausführung lässt sich der Straßenverschleiß durch den Spikepin 6 bei eis- beziehungsweise schneefreier Straße erheblich reduzieren. Zudem lassen sich beim Bremsen hohe Kräfte übertragen.

Im Unterschied hierzu stellt die Figur 5 den Zustand beim Bremsen des Fahrzeugs dar. Hierbei wirkt eine Bremskraft F_{B} aufgebracht, die zu einem Verkippen des Spikes 3 in einer definierten Richtung führt, weil die Bettungssteifigkeit des Spikefußes 5 in dieser Richtung weicher ausgeführt ist. Mit anderen Worten ist hierbei weniger Gummiwerkstoff unterhalb des Spikefußes 5 vorhanden, so dass der durch den Gummiwerkstoff dem Spike 3 entgegengebrachte Widerstand reduziert ist.

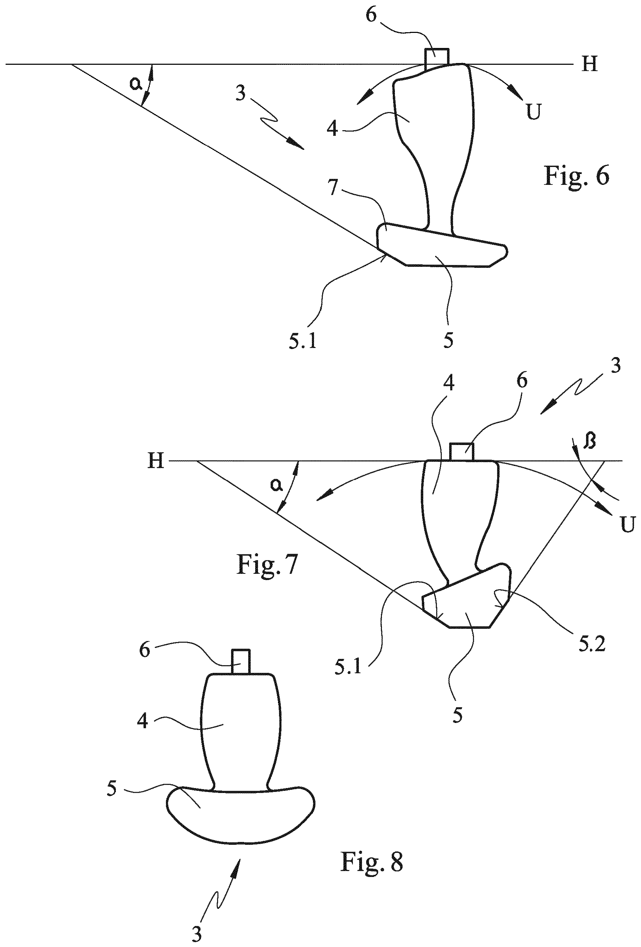

In den Figuren 6-13 werden lediglich beispielhaft unterschiedliche Ausführungsvarianten und Gestaltungsmöglichkeiten von Spikes 3 für erfindungsgemäße Fahrzeugluftreifen 1 dargestellt.

So zeigt die Figur 6 zunächst einen Spike 3 mit einem einseitig ausgebildeten, ebenen Abschnitt 5.1 am Spikefuß 5. Dieser ebene Abschnitt 5.1 ist unter einem Neigungswinkel α zur horizontalen Tangente H der Umfangsrichtung U des Fahrzeugluftreifens 1 ausgerichtet. Als Besonderheit ist bei dieser Variante eines Spikes 3 anzusehen, dass der Spikefuß 5 hierbei zusätzlich einen Verstärkungsbereich 7 aufweist. Dieser Verstärkungsbereich 7 ist, in Richtung Lauffläche 2 betrachtet, auf der dem ebenen Abschnitt 5.1 des Spikefußes 5 gegenüberliegenden Seite ausgebildet und verstärkt durch die Materialanhäufung damit zusätzlich die einseitige Kippneigung des Spikes 3. Durch diese Maßnahmen kann der Grip des Fahrzeugluftreifens 1 insbesondere bei Kurvenfahrten verbessert werden.

Im Unterschied hierzu zeigt die Figur 7 einen Spike 3, bei dem der Spikefuß 5 an zwei, einander gegenüberliegenden Seiten je einen ebenen Abschnitt 5.1 beziehungsweise 5.2 aufweist. Der ebene Abschnitt 5.1 ist dabei unter einem Winkel α und der ebene Abschnitt 5.2 unter dem Winkel β zur Tangente H der Umfangsrichtung U des Fahrzeugluftreifens 1 ausgerichtet. Insgesamt weisen die Spikes 3 in den Figuren 6-8 in der Seitenansicht beziehungsweise im Längsschnitt jeweils eine annähernd pilzförmige Geometrie auf. Auch hierbei wird der Grip des Fahrzeugluftreifens 1 bei Kurvenfahrten verbessert.

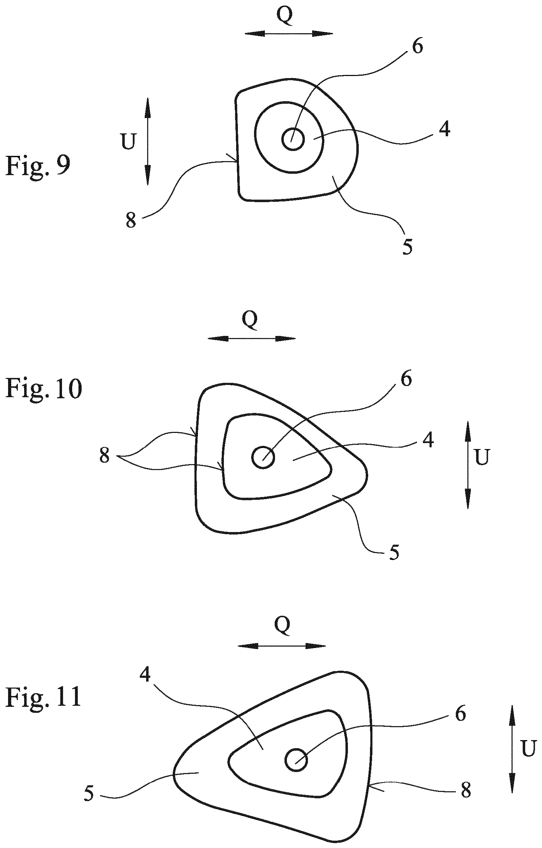

Die Figuren 9-11 stellen jeweils einen Blick auf einen Spike 3 in Richtung auf die Lauffläche 2 des Fahrzeugluftreifens 1 in unterschiedlichen Ausführungsvarianten dar. In den Figuren ist dabei jeweils die Umfangsrichtung U und die Querrichtung Q zur Umfangsrichtung U des Fahrzeugluftreifens 1 durch Doppelpfeile gekennzeichnet.

Bei der Ausführung in Figur 9 weist der Spikefuß 5, in Umfangsrichtung U des Fahrzeugluftreifens 1 betrachtet, eine Abflachung 8 auf. Der Spikekörper 4 ist hierbei im Querschnitt kreisförmig bis oval gestaltet und der Spikepin 6 weist eine kreisrunde Querschnittsgeometrie auf.

Auch bei der Ausführung in Figur 10 ist der Spikepin 6 mit einem kreisrunden Querschnitt versehen, wobei hier die Besonderheit darin zu sehen ist, dass der Spikefuß 5 und der Spikekörper 4 jeweils eine Abflachung 8 und dieser gegenüberliegend eine keilförmige Querschnittsgeometrie aufweisen, deren Orientierung gleichgerichtet ist, das heißt, die spitz zulaufende Geometrie des durch den Spikefuß 5 und den Spikekörper 4 gebildeten Keils weist in die gleiche Richtung.

Die Ausführung des Spikes 3 in Figur 11 ist ähnlich der in Figur 10. Lediglich die Orientierung, das heißt, die Richtung der Keilspitze, des Spikes 3 in Figur 11 innerhalb der Lauffläche 2 des Fahrzeugluftreifens 1 verläuft in entgegengesetzter Richtung zu der in Figur 10. So ist es beispielsweise möglich Spikes gemäß den Figuren 10 und 11 innerhalb einer Lauffläche 2 eines Fahrzeugluftreifens 1 abwechselnd anzuordnen oder auch nur Spikes nach je einer der dargestellten Ausführungen innerhalb der Lauffläche 2 vorzusehen.

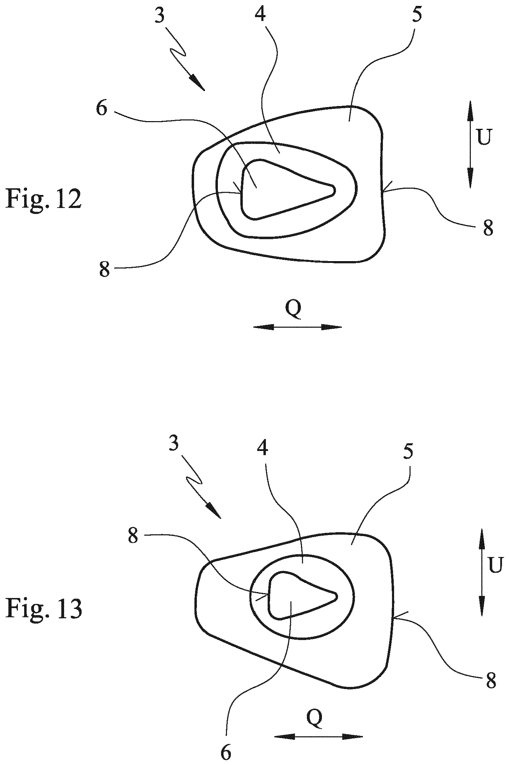

Alternativ zu den zuvor beschriebenen Ausführungsvarianten eines Spikes 3 veranschaulicht die Figur 12 den Blick auf einen Spike 3 in Richtung auf die Lauffläche 2 des Fahrzeugluftreifens 1, in einer Ausführungsvariante mit einer Keilform des Spikefußes 5, des Spikekörper 4 und des Spikepins 6. Von Bedeutung ist hierbei, dass bei der Lösung in Figur 12 die Spitze des Keils des Spikefußes 5 in die entgegengesetzte Richtung zur Orientierung der Spitze des Spikekörper 4 und des Spikepins 6 zeigt. Der Spikefuß 5 weist zudem entlang der Umfangsrichtung U eine Abflachung 8 auf. Ein derartiger Spike 3 ist in Umfangsrichtung U des Fahrzeugluftreifens 1 steif gegen ein Verkippen ausgeführt. In der Richtung der Spitze des Keils reagiert er hingegen "weich", also eher nachgiebig und "taucht" daher leichter in den Gummiwerkstoff des Fahrzeugluftreifens 1 ein. Die asymmetrische Geometrie bezieht sich hierbei ersichtlich, wie auch bei der nachfolgenden Ausführung gemäß Figur 13, auf den Spikepin 6, den Spikekörper 4 und den Spikefuß 5.

In der Figur 13 ist eine weitere Variante für einen Spike 3 dargestellt. Hierbei besteht die Besonderheit darin, dass der Spikefuß 5 einseitig entlang der Umfangsrichtung U eine Abflachung 8 aufweist und der Spikepin 6 eine keilförmige Querschnittsgeometrie mit einer Spitze aufweist, die in Richtung der Abflachung 8 weist. Hierbei verfügt der Spikekörper 4 über eine ovale Querschnittsgeometrie beziehungsweise kann dieser auch eine keilförmige Querschnittsgeometrie aufweisen und ist dann gleichgerichtet mit der Orientierung der keilförmigen Querschnittsgeometrie des Spikefußes 5.

### Bezugszeichenliste

- 1: Fahrzeugluftreifen
- 2: Lauffläche
- 3: Spike
- 4: Spikekörper
- 5: Spikefuß
- 5.1: Abschnitt
- 5.2: Abschnitt
- 6: Spikepin
- 7: Verstärkungsbereich
- 8: Abflachung
- 9: Seitenwand

- U: Umfangsrichtung
- H: horizontale Ebene
- Q: Querrichtung
- F: Kraft
- α: Winkel
- β: Winkel
- F_{T}: Traktionskraft
- F_{B}: Bremskraft

## Patentansprüche

1. Fahrzeugluftreifen (1) mit einer profilierten Lauffläche (2), in die mehrere Spikes (3) eingebettet sind, wobei jeder Spike (3) aus einem Spikekörper (4) mit einem Spikefuß (5) und einem aus der Lauffläche (2) des Fahrzeugluftreifens (1) hervorstehenden Spikepin (6) besteht,und die Spikes (3), in Querrichtung (Q) oder in Umfangsrichtung (U) der Lauffläche (2) oder in Vertikalrichtung zur Lauffläche (2) des Fahrzeugluftreifens (1) betrachtet, asymmetrisch ausgebildet sind,
dadaurch gekennzeichnet, dass
der Spikefuß (5) unter einem spitzen Winkel (α) zu einer geometrischen, quer zur Umfangsrichtung (U) oder tangential zur Umfangsrichtung (U) des Fahrzeugluftreifens (1) verlaufenden, horizontalen Ebene (H) in die Lauffläche (2) des Fahrzeugluftreifens (1) eingebettet ist.

2. Fahrzeugluftreifen nach Anspruch 1,
**dadurch gekennzeichnet, dass**
der Spikefuß (5) einen ebenen Abschnitt (5.1) aufweist, der einen spitzen Winkel (α) mit einer geometrischen, tangential zur Umfangsrichtung (U) des Fahrzeugluftreifens (1) verlaufenden, horizontalen Ebene (H) einschließt.

3. Fahrzeugluftreifen nach Anspruch 1,
**dadurch gekennzeichnet, dass**
der Spikefuß (5) zwei, einander gegenüberliegende, ebene Abschnitte (5.1, 5.2) aufweist, die jeweils einen spitzen Winkel (α und β) mit einer geometrischen, tangential zur Umfangsrichtung (U) des Fahrzeugluftreifens (1) verlaufenden, horizontalen Ebene (H) einschließen.

4. Fahrzeugluftreifen nach einem der vorstehend genannten Ansprüche,
**dadurch gekennzeichnet, dass**
der Spikefuß (5) wenigstens einen Verstärkungsbereich (7) aufweist.

5. Fahrzeugluftreifen nach einem der vorstehend genannten Ansprüche,
**dadurch gekennzeichnet, dass**
der Spikefuß (5) die Form eines Pilzkopfes aufweist.

6. Fahrzeugluftreifen nach einem der vorstehend genannten Ansprüche,
**dadurch gekennzeichnet, dass**
der Spikekörper (4) und/oder der Spikefuß (5) und/oder der Spikepin (6) zumindest einseitig eine Abflachung (8) beziehungsweise einen ebenen Abschnitt aufweist beziehungsweise aufweisen.

7. Fahrzeugluftreifen nach einem der vorstehend genannten Ansprüche,
**dadurch gekennzeichnet, dass**
der Spikekörper (4) und/oder der Spikefuß (5) und/oder der Spikepin (6) eine annähernd keilförmige Geometrie aufweist beziehungsweise aufweisen.

8. Fahrzeugluftreifen nach Anspruch 7,
**dadurch gekennzeichnet, dass**
die Keilform des Spikekörpers (4), des Spikefußes (5) und des Spikepins (6) in gleicher Ausrichtung zueinander ausgerichtet sind.

9. Fahrzeugluftreifen nach Anspruch 7,
**dadurch gekennzeichnet, dass**
die Keilform des Spikekörpers (4) und/oder des Spikefußes (5) und/oder des Spikepins (6) in zueinander wechselnden Richtungen ausgerichtet sind.

## Claims

1. Pneumatic vehicle tyre (1) having a profiled tread (2), in which a number of spikes (3) are embedded, each spike (3) consisting of a spike body (4) with a spike foot (5) and a spike pin (6) that protrudes from the tread (2) of the pneumatic vehicle tyre (1), and the spikes (3) being formed asymmetrically when viewed in the transverse direction (Q) or in the circumferential direction (U) of the tread (2) or in the vertical direction relative to the tread (2) of the pneumatic vehicle tyre (1),
**characterized in that**
the spike foot (5) is embedded in the tread (2) of the pneumatic vehicle tyre (1) at an acute angle (α) to a geometrical horizontal plane (H), running transversely to the circumferential direction (U) or tangentially to the circumferential direction (U) of the pneumatic vehicle tyre (1).

2. Pneumatic vehicle tyre according to Claim 1,
**characterized in that**
the spike foot (5) has a planar portion (5.1), which includes an acute angle (α) with a geometrical horizontal plane (H) running tangentially to the circumferential direction (U) of the pneumatic vehicle tyre (1).

3. Pneumatic vehicle tyre according to Claim 1,
**characterized in that**
the spike foot (5) has two planar portions (5.1, 5.2), which lie opposite one another and respectively include an acute angle (a and β) with a geometrical horizontal plane (H) running tangentially to the circumferential direction (U) of the pneumatic vehicle tyre (1).

4. Pneumatic vehicle tyre according to one of the preceding claims,
**characterized in that**
the spike foot (5) has at least one reinforcing region (7) .

5. Pneumatic vehicle tyre according to one of the preceding claims,
**characterized in that**
the spike foot (5) has the form of a mushroom head.

6. Pneumatic vehicle tyre according to one of the preceding claims,
**characterized in that**
the spike body (4) and/or the spike foot (5) and/or the spike pin (6) has or have at least on one side a flattening (8) or a planar portion.

7. Pneumatic vehicle tyre according to one of the preceding claims,
**characterized in that**
the spike body (4) and/or the spike foot (5) and/or the spike pin (6) has or have an approximately wedge-shaped geometry.

8. Pneumatic vehicle tyre according to Claim 7,
**characterized in that**
the wedge shape of the spike body (4), of the spike foot (5) and of the spike pin (6) are aligned in the same alignment in relation to one another.

9. Pneumatic vehicle tyre according to Claim 7,
**characterized in that**
the wedge shape of the spike body (4) and/or of the spike foot (5) and/or of the spike pin (6) are aligned in directions alternating in relation to one another.

## Revendications

1. Pneumatique de véhicule (1) doté d'une bande de roulement profilée (2) dans laquelle plusieurs crampons (3) sont incorporés, chaque crampon (3) étant composé d'un corps de crampon (4) avec un pied de crampon (5) et une pointe de crampon (6) dépassant de la bande de roulement (2) du pneumatique de véhicule (1), et les crampons (3) étant réalisés de manière asymétrique, vus dans la direction transversale (Q) ou dans la direction circonférentielle (U) de la bande de roulement (2) ou dans la direction verticale par rapport à la bande de roulement (2) du pneumatique de véhicule (1),
**caractérisé en ce que** le pied de crampon (5) est incorporé dans la bande de roulement (2) du pneumatique de véhicule (1) selon un angle aigu (α) par rapport à un plan géométrique horizontal (H) s'étendant transversalement à la direction circonférentielle (U) ou tangentiellement à la direction circonférentielle (U) du pneumatique de véhicule (1).

2. Pneumatique de véhicule selon la revendication 1, **caractérisé en ce que** le pied de crampon (5) présente une partie plane (5.1) qui forme un angle aigu (α) avec un plan géométrique horizontal (H) s'étendant tangentiellement à la direction circonférentielle (U) du pneumatique de véhicule (1).

3. Pneumatique de véhicule selon la revendication 1, **caractérisé en ce que** le pied de crampon (5) présente deux parties planes (5.1, 5.2), opposées l'une à l'autre, qui forment chacune un angle aigu (a et β) avec un plan géométrique horizontal (H) s'étendant tangentiellement à la direction circonférentielle (U) du pneumatique de véhicule (1).

4. Pneumatique de véhicule selon l'une quelconque des revendications précédentes, **caractérisé en ce que** le pied de crampon (5) présente au moins une zone de renforcement (7).

5. Pneumatique de véhicule selon l'une quelconque des revendications précédentes, **caractérisé en ce que** le pied de crampon (5) présente la forme d'une tête de champignon.

6. Pneumatique de véhicule selon l'une quelconque des revendications précédentes, **caractérisé en ce que** le corps de crampon (4) et/ou le pied de crampon (5) et/ou la pointe de crampon (6) présentent au moins sur un côté un méplat (8) ou une partie plane.

7. Pneumatique de véhicule selon l'une quelconque des revendications précédentes, **caractérisé en ce que** le corps de crampon (4) et/ou le pied de crampon (5) et/ou la pointe de crampon (6) présentent une géométrie approximativement en forme de coin.

8. Pneumatique de véhicule selon la revendication 7, **caractérisé en ce que** les formes de coin du corps de crampon (4), du pied de crampon (5) et de la pointe de crampon (6) sont alignées dans le même alignement les unes par rapport aux autres.

9. Pneumatique de véhicule selon la revendication 7, **caractérisé en ce que** les formes de coin du corps de crampon (4) et/ou du pied de crampon (5) et/ou de la pointe de crampon (6) sont alignées dans des directions alternées les unes par rapport aux autres.
